Europäisches Patentamt

European Patent Office

Office européen des brevets

(19)

(11) EP 0 780 345 A1

(12) EUROPEAN PATENT APPLICATION

(43) Date of publication:
25.06.1997 Bulletin 1997/26

(51) Int. Cl.$^6$: C03C 3/06, C03C 4/00

(21) Application number: 96119953.6

(22) Date of filing: 12.12.1996

(84) Designated Contracting States:
DE FR GB NL

(30) Priority: 22.12.1995 US 575810

(71) Applicant: CORNING INCORPORATED
Corning, N.Y. 14831 (US)

(72) Inventors:
• Rosplock, Cynthia Kay,
Corning Incorporated
Corning, NY 14831 (US)

• Sempolinski, Daniel Raymond,
Corning Incorporated
Corning, NY 14831 (US)

(74) Representative: Boon, Graham Anthony et al
Elkington and Fife,
Prospect House,
8 Pembroke Road
Sevenoaks, Kent TN13 1XR (GB)

(54) Optical element for UV transmission

(57) An optical element composed of a fused silica glass that is the product of a thermally converted polymethylsiloxane precursor, and that is adapted to transmit ultraviolet radiation at wavelengths below 300 nm without undergoing a sudden absorption transition, and a microlithography system employing a lens of such glass.

EP 0 780 345 A1

## Description

### FIELD OF THE INVENTION

Optical elements composed of fused silica and adapted to transmission of ultraviolet (UV) radiation.

### BACKGROUND OF THE INVENTION

Various processes are known in the art for the production of fused silica from vaporous reactants. The basic requirements are a feedstock solution, generating vapors (the reactants) from the feedstock solution, transporting the vapors and an oxidant to a reaction site, and catalyzing oxidation and combustion of the vapors coincidentally. The product is finally divided, spherical aggregates commonly referred to as silica soot. This soot may be deposited directly in the form of a boule, or may be deposited as particles that may be thermally consolidated. In either case, a transparent, non-porous, silica glass article of high purity is produced.

It will be appreciated that various other pure metal oxides, such as oxides of germanium, zirconium and titanium, may be produced in similar manner. However, the present invention is concerned with fused silica articles, and the invention is described with reference to such articles.

For various reasons, silicon tetrachloride ($SiCl_4$) became the standard feedstock for production of either silica soot or solid bodies of fused silica. $SiCl_4$ has a serious draw back in that the by-product of hydrolysis is HCl. The environmental unfriendliness of this material necessitates considerable care in its disposal. Also, impurities in the chloride result in particulate impurities in the ultimate product. Nevertheless, $SiCl_4$ has remained in use for over a half century.

In recent years, enhanced sensitivity to protection of the environment, as well as strict government regulations regarding permissible emissions into the air, have developed. This has led to a search for a halide-free feedstock more friendly to the environment. The search culminated in the discovery that certain siloxane-based organics could replace $SiCl_4$ as a precursor for production of silica particles without substantial change in the method of production.

Based on that discovery, fused silica articles are now produced by Corning Incorporated using octamethylcyclotetrasiloxane (OMCTS) as a chemical precursor This fused silica material is available under Code 7980. Reference is made to United States Patent No. 5,043,002 (Dobbins et al.) for further details, and the teachings of that patent are incorporated herein in their entirety.

Fused silica-type materials have become well known through their use in the production of large telescope mirrors. Recently, however, considerable interest has developed in producing optical elements, such as lenses, from such materials In particular, there is a desire to produce stepper and scanner lenses from such materials for use with an excimer laser in microlithographic systems. A key requirement for such use is the capability of transmitting very short wavelength radiation in the UV region, in particular radiation at 193 and 248 nm wavelengths. It is anticipated that the pulsed excimer laser will be the illumination source for the next generation of stepper and scanner lenses. This laser generates radiation in the short UV region, in particular at 193 and 248 nm wavelengths.

Attempts were made to use the traditional Code 7940 fused silica glass for optical elements designed to transmit very short ultraviolet radiation. This work revealed that the glass exhibits compaction, UV absorption and a red fluorescence when exposed to intense UV radiation for a prolonged period of time. Further, these characteristics continue to increase as the period of exposure increases.

Of particular concern is the fact that, as the damage due to UV absorption accumulates, a point is reached at which the absorption damage increases rapidly and does not undergo a normal relaxation when exposure is discontinued. This point has been termed "sudden absorption transition (SAT)" in a publication by D. Krajnovich, I. K. Pour, A.C. Tam, W. Lueng and M. Kulkarmi entitled "Sudden Onset of Strong Absorption Followed by Forced Recovery in KrF Irradiated Fused Silica", OPTICS LETTERS, Vol. 18, No. 6, pp. 453-455, March 15, 1993.

The SAT effect usually occurs in Code 7940 glass after exposure to 6- 10 million pulses with a beam of 350-400 mJ/cm$^2$ intensity. The transition point will normally occur after fewer pulses with a beam of higher intensity. Conversely, it will normally occur only after more pulses with a beam of lower intensity, say 250 mJ/cm$^2$. This condition is deleterious to lens use because it leads to sharp temperature rises in the glass under exposure.

It is a purpose of the present invention to provide fused silica optical elements that are not subject to this "sudden absorption transition" effect from exposure to ultraviolet radiation. Another purpose is to achieve this desired end while avoiding working with a hydrogen-containing atmosphere. A further purpose is to provide an optical element for use in conjunction with a pulsed excimer laser in a microlithography system without incurring the SAT effect from UV absorption.

### SUMMARY OF THE INVENTION

An optical element composed of a fused silica glass that is the product of a thermally converted polymethylsiloxane precursor, and that is adapted to transmit ultraviolet radiation at wavelengths below 300 nm without undergoing a sudden absorption transition.

The invention further relates to the use of such an optical element in conjunction with a pulsed excimer laser in a microlithography system.

The invention further resides in a method of producing an optical element for transmission of ultraviolet radiation below 300 nm in wavelength without incurring a sudden absorption transition, the method consisting of forming the optical element from a fused silica produced by thermal conversion of a polymethylsiloxane.

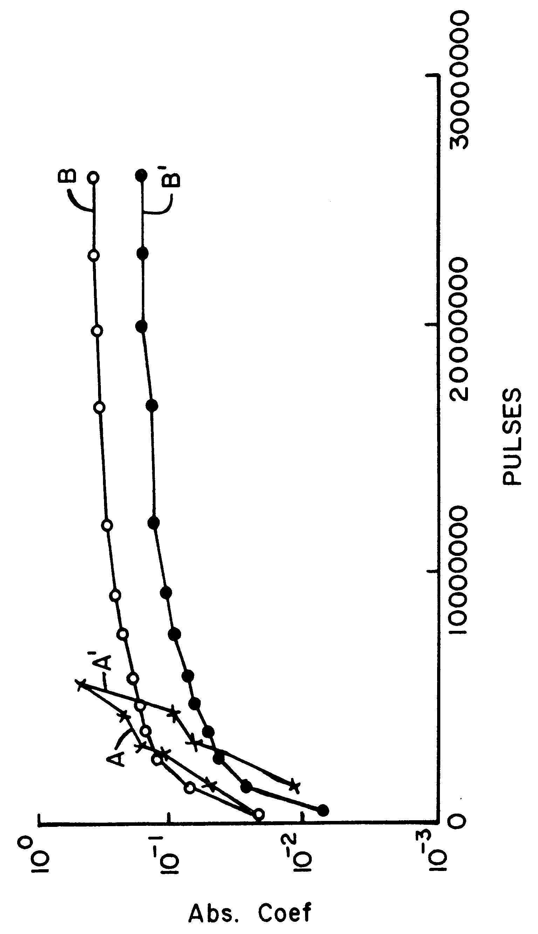

## BRIEF DESCRIPTION OF THE DRAWING

The single FIGURE in the accompanying drawing is a graphical illustration of an advantage ensuing from the present invention.

## DESCRIPTION OF THE INVENTION

The present invention arose from studies carried out on the optical behavior of fused silica articles. These articles were produced from different precursor materials and by different methods.

Initial studies were made on the traditional fused silica material produced employing a solution of $SiCl_4$ as the precursor material. Fused silica products produced in this manner are marketed by Corning Incorporated under Code 7940. When exposed to intense ultraviolet radiation such as generated by a pulsed excimer laser, the material exhibits compaction, UV absorption and red fluorescence. Each of these properties continues to increase with increased exposure to the short wavelength radiation.

The UV absorption is ascribed to a structural defect termed an E' center. This structural defect results from a paramagnetic electron trapped in a dangling silicon orbital projecting into interstitial space. The E' center is detected by electron spin resonance spectroscopy since it has an unpaired electron. The induced E' center has a 5.8 eV (210 nm) absorption band. The adsorption at 210 nm is particularly deleterious in applications employing an ArF laser generating radiation at 193 nm. The absorption band tends to tail into the irradiating wavelength region of this laser.

The E' center defect has been found to occur in all types of fused silica examined. It increases approximately quadratically with beam intensity and linearly with the number of radiation pulses from a laser. The absorption effect will relax in part over a period of several minutes after removal from the irradiation of a laser beam. However, upon re-exposure to a laser beam, the absorption quickly recovers to its prior level. It then continues its normal rate of increase. In searching for an explanation of this effect, it was observed that it could be the result of residual chlorine in the Code 7940 fused silica. This residual level is on the order of 50-100 ppm.

The polymethylsiloxane material employed as a precursor for the Code 7980 fused silica does not introduce chlorine. The level present is below the detectable limit of 3 ppm. Accordingly, a study was initiated on the Code 7980 glass as a means of determining the effect of chlorine.

Initially, it was observed that the two types of fused silica glass behave in a very similar manner. Thus, they both exhibit compaction, and they both undergo increasing UV absorption and induced red fluorescence with increasing length of exposure to ultraviolet radiation.

However, at the point where the 7940 glass reaches its SAT level, their behavior diverges markedly. The compaction continues with further exposure in both types of glass. However, the 7980 glass does not undergo the rapid increase in UV absorption and fluorescence characteristic of the 7940 glass. Rather, the increases in absorption and fluorescence occur more slowly and move toward a constant level. Of particular significance is the fact that the ultraviolet absorption effect does not undergo the sudden transition. This means that a fused silica glass article can be produced that is not subject to the transition effect. Further, this can be accomplished without resort to any auxiliary treatment, such as the hydrogen anneal. The key is to employ a polymethylsiloxane precursor in producing the fused silica article.

The difference in behavior is illustrated graphically in the single FIGURE of the attached drawing. Intensity of radiation is plotted on the horizontal axis in terms of millions of laser pulses. The change in absolute coefficient (Abs. Coeff.) is measured at 210 nm in absorbance units per centimeter. It is plotted on the vertical axis. Measurements were made on fused silica test pieces exposed to a pulsed KrF laser delivering a beam of 350 mJ/cm$^2$ intensity. This laser emits radiation at the 248 nm wavelength.

The change in the UV transmission was measured both on-line and off-line for both Code 7940 and Code 7980 glasses. Because the absorption damage tends to relax out at room temperature, the off-line measurements were made within 5 minutes after the sample was removed from the beam. The measurements were normally made at intervals of 2 million pulses. As indicated in the drawing, measurements were made on Code 7980 glass to a point beyond 25 million pulses where behavior had reached a plateau

The transmission measurement consisted of two scans from 200 to 400 nm. The first was made within the damaged zone centered at the point of maximum beam intensity. The second was a reference scan made in an undamaged area. The measurements were made parallel to the path of the laser beam. A machine baseline was run just before each pair of spectral scans. The data were reported as the difference between the absorption coefficients of the two scans. The individual coefficients were calculated by first adjusting the data to its theoretical value at 400 nm (92.9%) and then using the equation

$$T(\%) = 100\ (1\text{-}R)^2\ e^{-at}$$

where a is the absorption coefficient, t is the sample thickness and R is the theoretical reflection coefficient.

Curves A and A' are based, respectively, on data obtained from on-line and off-line measurements made on a Code 7940 glass test piece; curves B and B' are likewise based on data obtained from measurements on a Code 7980 glass test piece. It will be observed that the behavior of the two test pieces is essentially identical up to a point between six and 12 million, the lower number being more typical. At that point, the absorption of the 7940 glass, curve A, rises sharply. In contrast, the absorption of the Code 7980 glass (curve B) continues on a smooth curve that levels off in a horizontal direction. In addition to rising sharply, the absorption value shown by curve A undergoes the sudden absorption transition. In contrast, absorption curve B for the Code 7980 glass test piece not only levels off but does not undergo the transition. This difference in behavior of the two types of fused silica glass is surprising and completely unexpected.

## Claims

1. An optical element composed of a fused silica glass that is the product of a thermally converted polymethylsiloxane precursor, and that is adapted to transmit ultraviolet radiation at wavelengths below 300 nm without undergoing a sudden absorption transition.

2. An optical element in accordance with claim 1 wherein the fused silica has a hydrogen content below $10^{18}$ molecules per $cm^3$ of glass.

3. An optical element in accordance with claim 2 wherein the fused silica has a hydrogen content of about $3\text{-}4 \times 10^{17}$ molecules per $cm^3$ of glass.

4. An optical element in accordance with claim 1 wherein the fused silica is essentially chloride-free.

5. An optical element in accordance with claim 1 wherein the precursor is a polymethylcyclosiloxane.

6. An optical element in accordance with claim 5 wherein the precursor is octamethylcyclotetrasiloxane.

7. An optical element in accordance with claim 1 that is adapted to transmit radiation equivalent to radiation from a pulsed excimer laser operating at 350-400 $mJ/cm^2$ and that will transmit over 10 million pulses without undergoing a sudden absorption transition.

8. A microlithography system comprising a pulsed excimer laser that emits radiation at wavelengths below 300 nm and at least one fused silica lens that transmits the emitted radiation without undergoing a sudden absorption transition and that is the product of a thermally converted polymethylsiloxane precursor.

9. A microlithography system in accordance with claim 8 wherein the pulsed excimer laser is a KrF laser.

10. A method of producing an optical element for transmission of ultraviolet radiation below 300 nm in wavelength without incurring a sudden absorption transition, the method consisting of forming the optical element from a fused silica produced by thermal conversion of a polymethylsiloxane.

European Patent
Office

**EUROPEAN SEARCH REPORT**

Application Number

EP 96 11 9953

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | OPTICAL AND ELECTRICAL PROPERTIES OF GLASSES. THIRTEENTH UNIVERSITY CONFERENCE ON GLASS SCIENCE, TROY, NY, USA, 9-11 AUG. 1995, vol. 203, ISSN 0022-3093, JOURNAL OF NON-CRYSTALLINE SOLIDS, 1 AUG. 1996, ELSEVIER, NETHERLANDS, pages 69-77, XP002027755 SEMPOLINSKI D R ET AL: "Effects of glass forming conditions on the KrF-excimer-laser-induced optical damage in synthetic fused silica" * page 69 - page 71, left-hand column, last paragraph * * page 74 * * page 76 * | 1-10 | C03C3/06 C03C4/00 |
| X | US 5 395 413 A (SEMPOLINSKI DANIEL R ET AL) 7 March 1995 * column 3, line 5 - line 13 * * column 4, line 29 - line 37 * | 1-10 | |
| X | US 5 332 702 A (SEMPOLINSKI DANIEL R ET AL) 26 July 1994 * column 3, line 3 - line 11 * * column 4, line 27 - line 35 * | 1-10 | TECHNICAL FIELDS SEARCHED (Int.Cl.6) C03C |
| P,X | EP 0 737 654 A (CORNING INC) 16 October 1996 * page 2, line 5 - line 28 * * page 3, line 10 - line 28 * * page 4, line 53 - page 5, line 13 * | 1,4-10 | |
| D,X | US 5 043 002 A (DOBBINS MICHAEL S ET AL) 27 August 1991 * column 3, line 1 - column 4, line 4 * * column 5, line 61 - column 6, line 11 * | 1,2,4-7, 10 | |

-/--

The present search report has been drawn up for all claims

| Place of search | Date of completion of the search | Examiner |
|---|---|---|
| THE HAGUE | 18 March 1997 | Van Bommel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

6

EP 0 780 345 A1

| | European Patent Office | EUROPEAN SEARCH REPORT | Application Number EP 96 11 9953 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| D,A | OPTICS LETTERS, 15 MARCH 1993, USA, vol. 18, no. 6, ISSN 0146-9592, pages 453-455, XP002027756 KRAJNOVICH D J ET AL: "Sudden onset of strong absorption followed by forced recovery in KrF laser-irradiated fused silica" * the whole document * | 1-10 | |

TECHNICAL FIELDS SEARCHED (Int.Cl.6)

The present search report has been drawn up for all claims

| Place of search | Date of completion of the search | Examiner |
|---|---|---|
| THE HAGUE | 18 March 1997 | Van Bommel, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

7